# EUROPÄISCHE PATENTSCHRIFT

(11) **EP 2 753 463 B1**
(45) Veröffentlichungstag und Bekanntmachung des Hinweises auf die Patenterteilung: **28.09.2016**
(21) Anmeldenummer: 12750699.6
(22) Anmeldetag: 18.07.2012
(51) Int. Cl.: B29C 45/16, B29C 45/40, B29C 45/26

(54) **WERKZEUG ZUM SPRITZGIESSEN VON KUNSTSTOFFTEILEN**
MOULD FOR INJECTION-MOULDING PLASTICS PARTS
OUTIL POUR LE MOULAGE PAR INJECTION DE PIÈCES EN MATIÈRE PLASTIQUE

(30) Priorität: 09.09.2011 DE 102011112971
(43) Veröffentlichungstag der Anmeldung: 16.07.2014
(73) Patentinhaber: Braunform GmbH, 79353 Bahlingen (DE)
(72) Erfinder: HERB, Eckard, 79346 Endingen (DE)
(74) Vertreter: Goy, Wolfgang
(86) Internationale Anmeldenummer: PCT/DE2012/000732
(87) Internationale Veröffentlichungsnummer: WO 2013/034118

(56) Entgegenhaltungen:
- WO-A1-2004/024414
- DE-A1- 4 400 649
- DE-A1-102004 058 973
- US-A- 4 274 617
- KRAEMER D: "KAVITAETEN WECHSELN AM AUFGESPANNTEN WERKZEUG", KUNSTOFFE INTERNATIONAL, CARL HANSER VERLAG, MUNCHEN, DE, Bd. 87, Nr. 10, 1. Oktober 1997 (1997-10-01), Seiten 1320-1322, XP000723388, ISSN: 0023-5563

## Beschreibung

Die Erfindung betrifft ein Werkzeug zum Spritzgießen von Kunststoffteilen nach dem Oberbegriff des Anspruchs 1.

Das erfindungsgemäße Werkzeug dient dem 1-Komponenten-Spritzgießen sowie dem Mehr-Komponenten-Spritzgießen von Kunststoffteilen. Weiterhin ist das erfindungsgemäße Werkzeug für die Thermoplastverarbeitung einsetzbar. Aber auch Duroplast- und Elastomer-Anwendungen sind denkbar.

Das Dokument US-A-4274617 offenbart ein Werkzeug gemäß dem Oberbegriff des Anspruchs 1.

Werkzeuge zum Spritzgießen von Kunststoffteilen weisen grundsätzlich zwei Werkzeughälften auf, welche auseinandergefahren sowie zusammengefahren werden können. Im geschlossenen Zustand des Werkzeugs, d. h. wenn die beiden Werkzeughälften aneinanderliegen, ist zwischen diesen beiden Werkzeughälften wenigstens ein Formenhohlraum ausgebildet. In diesen Formenhohlraum wird der viskose Kunststoff hineingespritzt. Nach dem Erkalten können dann die beiden Werkzeughälften auseinandergefahren und die so gespritzten Kunststoffteile ausgeworfen werden.

Das Problem bei den bekannten Werkzeugen zum Spritzgießen von Kunststoffteilen der gattungsgemäßen Art besteht in der Auswerfereinrichtung. Hierfür ist ein separater Mechanismus vorgesehen, welcher dann betätigt wird, wenn nach dem Auseinanderfahren der beiden Werkzeughälften die fertigen Spritzlinge ausgestoßen werden sollen. Als Auswerfereinrichtung dient eine Abstreifleiste, welche auf die Formkerne, beispielsweise Formstifte, aufgesetzt und auf diesen verfahrbar ist. Durch Nachvornebewegen der Abstreifleiste werden die Spritzlinge von ihren Formkernen abgestreift. Zum Betätigen dieser Abstreifleiste ist ein separater Antrieb vorgesehen, was technisch aufwendig ist und darüber hinaus die Zykluszeit erhöht.

Davon ausgehend liegt der Erfindung die **Aufgabe** zugrunde, bei einem Werkzeug zum Spritzgießen von Kunststoffteilen der eingangs angegebenen Art die Betätigung der Abstreifleiste zum Abstreifen der fertigen Spritzlinge zu vereinfachen.

Die technische **Lösung** ist gekennzeichnet durch die Merkmale im Kennzeichen des Anspruchs 1.

Dadurch ist ein Werkzeug zum Spritzgießen von Kunststoffteilen geschaffen, welches sich durch eine verbesserte Abstreifeinrichtung für die auf den Formkernen, beispielsweise Formstiften, befindlichen fertigen Spritzlinge auszeichnet. Der Vorteil dieser verbesserten Abstreifeinrichtung liegt in einer einfachen Konstruktion, da keine separaten Antriebe notwendig sind, verbunden mit einer verkürzten Zykluszeit. Die Grundidee der erfindungsgemäßen Abstreifeinrichtung besteht dabei darin, daß beim Ausfahren der Hubplatte über einer Zwangsführung die Abstreifleiste synchron mit betätigt wird, so daß die auf ihnen befindlichen fertigen Spritzlinge abgestreift werden. Diese Zwangsführung während des Ausfahrens der Hubplatte hat den Vorteil, daß auf zusätzliche Antriebe für die Abstreifleiste verzichtet werden kann. Die Hubplatte ist dabei im allgemeinsten Sinne zu verstehen. Sofern nur eine einzige Komponente gespritzt wird, wird die Hubplatte beispielsweise mittels einer Hubstange oder mittels eines anderen Mechanismus nach dem Auseinanderfahren der beiden Werkzeughälften verfahren, so daß dann die auf den Formkernen befindlichen fertigen Spritzlinge abgestreift werden können. Anschließend kehrt die Hubplatte wieder in ihre Ausgangsstellung zurück. Sofern jedoch mehrere Komponenten gespritzt werden, handelt es sich bei der Hubplatte um die Indexplatte bzw. um das Wendeteil, um die Vorspritzlinge den nächsten Formenhohlräumen zum Spritzen der weiteren Komponente(n) zuführen zu können. Für diesen Zweck ist die Indexplatte bzw. das Wendeteil mittels einer Hubstange drehbar. Somit besteht auch beim Spritzen von mehreren Komponenten das Grundprinzip darin, daß beim Ausfahren der Indexplatte bzw. des Wendeteils die Abstreifleiste synchron zwangsgeführt und dabei die Fertigspritzlinge abgestreift werden.

Gemäß der Erfindung ist die Führungseinrichtung seitlich am Werkzeug angeordnet. Vorzugsweise ist gemäß der Weiterbildung in Anspruch 2 an jedem der beiden Enden der Abstreifleiste eine Führung vorgesehen. Dies hat den Vorteil, daß auf die Führungsleiste gleichmäßige Kräfte wirken, ohne daß die Gefahr von Verkantungen besteht.

Eine bevorzugte Weiterbildung schlägt gemäß Anspruch 3 vor, daß die Führung gekrümmt verläuft. Insbesondere ist die Führung S-förmig gekrümmt. Dies hat den Vorteil, daß durch eine entsprechende Kontur der Führung die Abstreifkräfte bzw. das Abstreifkraftprofil gezielt beeinflußt werden kann. So kann die Führung so profiliert sein, daß bei Beginn der Abstreifbewegung die Führungsleiste nur langsam bewegt wird, da zu diesem Zeitpunkt die Abstreifkräfte am größten sind. Wenn sich dann der Spritzling von dem Formkern erst einmal gelöst hat, kann die Abstreifbewegung schneller erfolgen.

Die Weiterbildung gemäß Anspruch 4 schlägt vor, daß beim Einfahren der Hubplatte die Abstreifleiste auf dem umgekehrten Führungsweg wieder in ihre Ausgangsposition zurück bewegt wird. Somit ist wieder eine synchrone Zwangsbewegung für die Abstreifleiste realisiert. Sofern zwei oder mehr Komponenten gespritzt werden, kann die Abstreifleiste auch dadurch wieder in ihre Ausgangsposition zurückbewegt werden, indem man auf sie die Gravitationskraft wirken läßt. In diesem Fall sind dann die Formkerne senkrecht nach oben hin ausgerichtet. Schließlich ist es auch denkbar, daß die ausgefahrene Abstreifleiste hydraulisch, pneumatisch oder elektrisch zurückbewegt wird.

Die Weiterbildung gemäß Anspruch 5 schlägt speziell das Spritzen von mehreren Komponenten, beispielsweise das Spritzen von zwei Komponenten vor. In diesem Fall dient die Hubplatte zugleich als Indexplatte bzw. als Wendeteil, um nach dem Ausfahren taktweise die einzelnen Spritzstationen anzufahren. Nachdem bei diesem Mehrkomponenten-Spritzgießen die letzte Komponente gespritzt worden ist, wird mit dem Ausfahren der Indexplatte bzw. des Wendeteils die Abstreifleiste - wie beschrieben - synchron zwangsgeführt, so daß die Fertigspritzlinge von ihren Formkernen abgestreift werden.

Die Weiterbildung gemäß Anspruch 6 schlägt vor, daß die den Fertigspritzlingen zugeordnete Führungseinrichtung verstellbar ist. Der Hintergrund ist dabei Folgender: Wenn nach dem Spritzen der letzten Komponente die Fertigspritzlinge ausgeworfen worden sind, wird die Indexplatte um eine Position weitergedreht. Die Abstreifleiste befindet sich hier aber bereits in ihrer Ausgangsposition. Beim Zurückfahren der Indexplatte in die Werkzeughälfte wäre dann die Führungseinrichtung im Weg. Aus diesem Grunde ist sie verstellbar, so daß die Abstreifleiste der Indexplatte die Führungseinrichtung ungehindert passieren kann.

Alternativ ist es gemäß der Weiterbildung in Anspruch 7 auch möglich, daß der Führung der Führungseinrichtung eine Weiche zugeordnet ist. In diesem Fall ist die Führungseinrichtung stationär angeordnet. Durch Betätigen der Weiche werden dann die endseitigen Führungselemente der Abstreifleiste so geführt, daß sie bei der Abstreifbewegung längs der Führung verläuft.

Schließlich schlägt die Weiterbildung gemäß Anspruch 8 vor, daß die Hubplatte an der Führungseinrichtung abgestützt ist. Dies bedeutet, daß die Führungseinrichtung dem Grunde nach zweckentfremdet zur Abstützung der Hubplatte verwendet wird, um somit in der Hubstange auftretendende Biegemomente und Querkräfte zu minimieren.

Ein Ausführungsbeispiel eines erfindungsgemäßen Werkzeugs zum 2-Komponenten-Spritzgießen von Kunststoffteilen wird nachfolgend anhand der Zeichnungen beschrieben. In diesen zeigt:
- Fig. 1: das geschlossene Werkzeug in Spritzstellung;
- Fig. 2a: das offene Werkzeug nach dem Spritzen;
- Fig. 2b: eine perspektivische Ansicht der einen Werkzeughälfte des Werkzeugs in Fig. 2a;
- Fig. 3a: das offene Werkzeug bei der Abstreifbewegung;
- Fig. 3b: eine perspektivische Ansicht der einen Werkzeughälfte des Werkzeugs in Fig. 3a;
- Fig. 4a: das offene Werkzeug nach Beenden des Abstreifens;
- Fig. 4b: eine perspektivische Ansicht der einen Werkzeughälfte des Werkzeugs in Fig. 4a;
- Fig. 5a: das offene Werkzeug nach Drehen der Indexplatte um 180°;
- Fig. 5b: eine perspektivische Ansicht der einen Werkzeughälfte des Werkzeugs in Fig. 5a;
- Fig. 6a: das offene Werkzeug beim Zurückfahren des Abstreifers;
- Fig. 6b: eine perspektivische Ansicht der einen Werkzeughälfte des Werkzeugs in Fig. 6a;
- Fig. 7a: die Führung mit einer Weiche in einer ersten Position;
- Fig. 7b: die Führung mit einer Weiche in einer zweiten Position.

Das Werkzeug zum 2-Komponenten-Spritzgießen von Kunststoffteilen weist zwei Werkzeughälften 1, 2 auf. Diese beiden Werkzeughälften 1, 2 sind öffenbar und schließbar. Die Werkzeughälften 1, 2 definieren zwischen sich Formenhohlräume zum Spritzen der entsprechenden Komponenten des Kunstoffteils.

In der in der Zeichnung linken Werkzeughälfte 1 ist eine Hubstange 3 längsverschiebbar sowie drehbar angeordnet. Am vorderen Ende dieser Hubstange 3 befindet sich eine Hubplatte 4 in Form einer Indexplatte. An dieser Hubplatte 4 sind an den beiden gegenüberliegenden Seiten radial abstehende Formkerne 5 in Form von Formstiften parallel zueinander angeordnet. Auf diese Formkerne 5 ist eine Abstreifleiste 6 aufgeschoben.

Beidseits der - in der Zeichnung - linken Werkzeughälfte 1, nämlich beidseits der Hubplatte 4 befinden sich Führungseinrichtungen 7. Diese definieren innenseitig jeweils S-förmige Führungen 8.

Die Funktionsweise des Werkzeugs ist wie folgt:

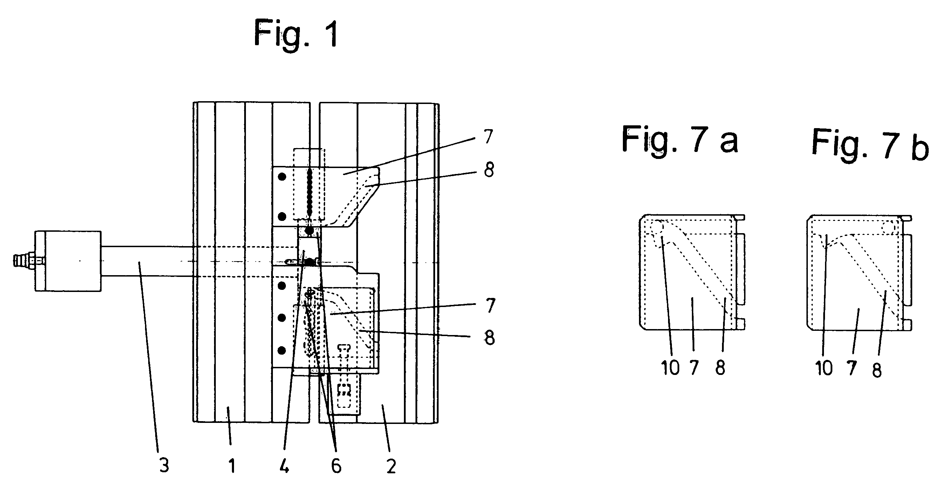

Fig. 1 zeigt das geschlossene Werkzeug in Spritzstellung. Oben wird die erste Komponente und unten die zweite Komponente gespritzt.

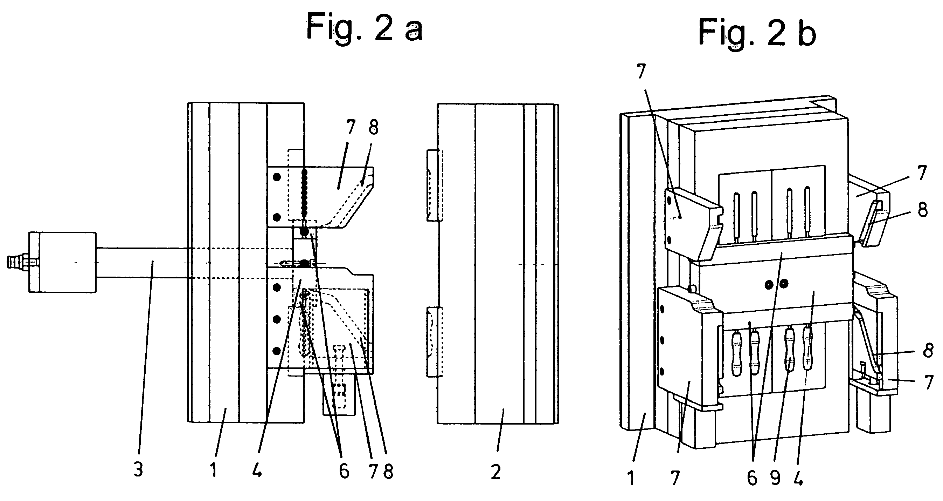

Fig. 2a und 2b zeigt das offene Werkzeug nach dem Auseinanderfahren der beiden Werkzeughälften 1, 2. Die Hubstange 3 mit ihrer Hubplatte 4 befindet sich dabei noch in der hinteren Grundstellung.

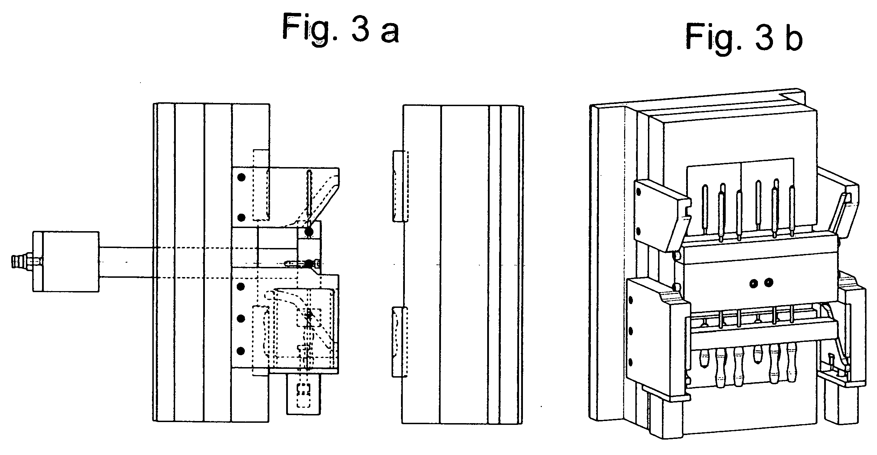

Fig. 3a und Fig. 3b zeigt die Situation, wenn die Hubstange 3 mit ihrer Hubplatte 4 ausgefahren wird. Die Abstreifleiste 6 ist mit endseitigen, auskragenden Führungselementen in den Führungen 8 der beiden unteren Führungseinrichtungen 7 geführt. Aufgrund der gekrümmten Führung 8 wird bei der Nachvornebewegung der Hubstange 3 mit ihrer Hubplatte 4 die untere Abstreifleiste 6 synchron in der Zeichnung nach unten bewegt. Dadurch werden die Spritzlinge 9 von ihren Formkernen 7 abgestreift. Aufgrund der S-förmigen Formgebung der Führung 8 erfolgt diese Abstreifbewegung im flachen Bereich der Führung 8 zunächst langsam, um dann anzusteigen.

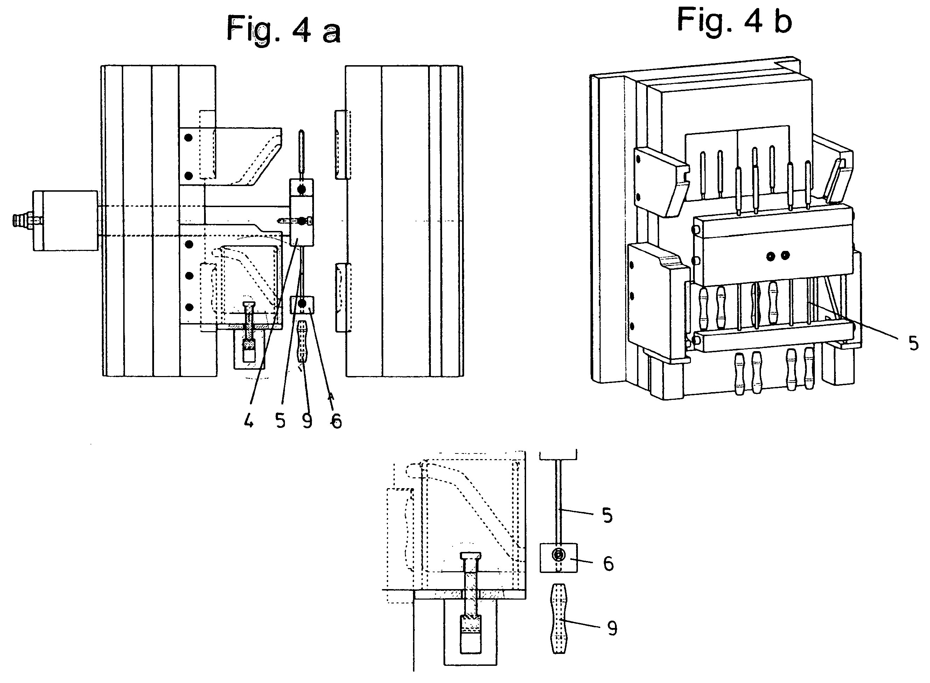

Fig. 4a und 4b zeigt die Situation nach dem vollständigen Ausfahren der Hubstange 3. Die fertigen Spritzlinge 9 sind vollständig von ihren Formkernen 5 abgestreift. Dies bedeutet, daß sich die Abstreifleiste 6 in ihrer radial äußeren Stellung befindet, und zwar außerhalb der Führungen 8 der Führungseinrichtungen 7.

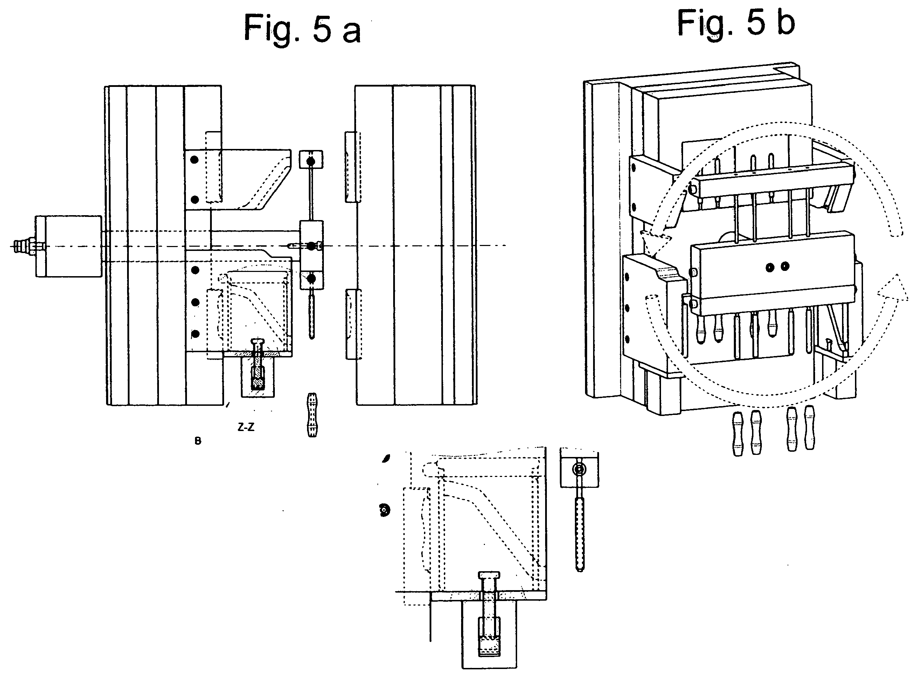

Fig. 5a und 5b zeigt das Drehen der Hubstange 3 mit ihrer Hubplatte 4 (Indexplatte) um 180°. Dies bedeutet, daß die unteren Formkerne 5 nunmehr oben zu liegen kommen.

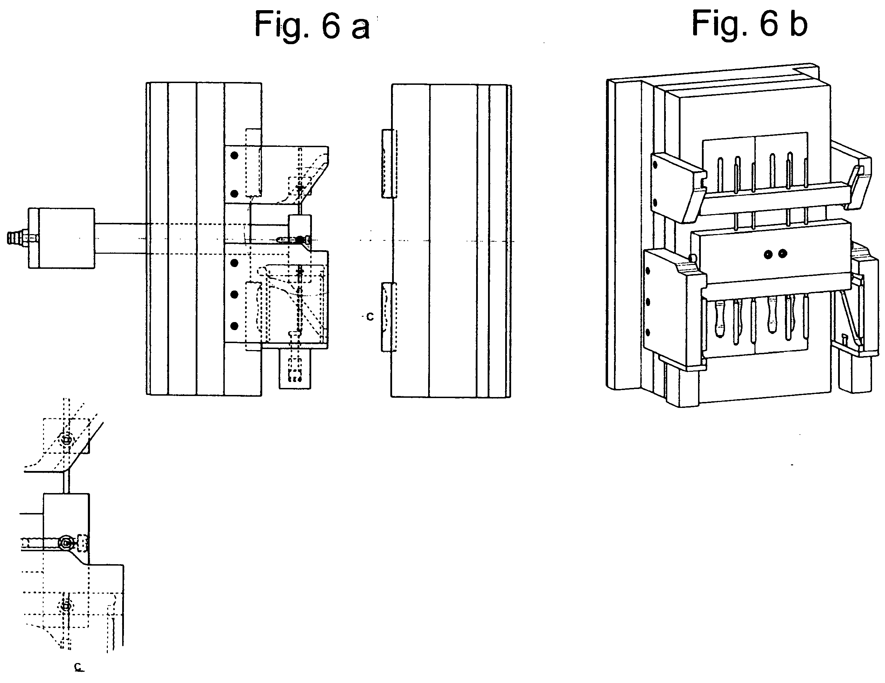

Anschließend wird gemäß Fig. 6a und 6b die Hubstange 3 mit ihrer Hubplatte 4 (Indexplatte) wieder eingefahren. Da die obere Abstreifleiste 6 dadurch in den Bereich der Führung 8 der oberen Führungseinrichtungen 7 gelangt, wird diese obere Abstreifleiste 6 wieder in ihre Ausgangsstellung zurückbewegt. Da sich die untere Abstreifleiste 6 bereits in der inneren Ausgangsstellung befindet, wäre die Führungseinrichtung 7 bei der Einschubbewegung der Hubstange 6 im Weg. Aus diesem Grunde werden die unteren Führungseinrichtungen 7 in der Zeichnung nach unten bewegt, so daß ein Kanal geschaffen wird, längs dem die untere Abstreifleiste 6 unter Passieren der Führungseinrichtungen 7 nach innen verfahren kann.

Schließlich werden die beiden Werkzeughälften 1, 2 wieder zusammegefahren, so daß mit dem Spritzvorgang begonnen werden kann. Dies ist die Situation, wie sie in Fig. 1 dargestellt ist.

Fig. 7a und 7b zeigt als Alternative eine Weiche 10 für die Führungseinrichtung 7 bzw. für die Führung 8. Fig. 7a zeigt dabei die geschlossene Weiche 10, so daß die Abstreifleiste vorfahren kann. Fig. 7b zeigt die geöffnete Weiche 10, bei der die Abstreifleiste 6 zurückfahren kann.

### Bezugszeichenliste

- 1: Werkzeughälfte
- 2: Werkzeughälfte
- 3: Hubstange
- 4: Hubplatte
- 5: Formkern
- 6: Abstreifleiste
- 7: Führungseinrichtung
- 8: Führung
- 9: Spritzling
- 10: Weiche

## Patentansprüche

1. Werkzeug zum Spritzgießen von Kunststoffteilen,
mit zwei ausfahrbaren sowie zusammenfahrbaren Werkzeughälften (1, 2),
wobei im geschlossenen Zustand zwischen den beiden Werkzeughälften Formenhohlräume ausgebildet sind,
mit einer, in der einen Werkzeughälften (1) verfahrbar angeordneten Hubplalte (4) zwischen den beiden Werkzeughälften (1, 2),
mit an der Hubplalte (4) im Wesentlichen radial abstehenden sowie zueinander parallelen Formkernen (5), auf welche die Spritzlinge (9) aufgespritzt werden, sowie mit einer auf den Formkernen (5) verschiebbar angeordneten Abstreifleiste (6) zum Abstreifen der fertigen Spritzlinge (9) von ihren Formkernen (5),
**dadurch gekennzeichnet,**
**dass** die eine Werkzeughälfte (1) mit der Hubplatte (4) eine seitlich am Werkzeug angeordnete Führungseinrichtung (7) mit einer Führung (8) aufweist, in welcher ein Ende der Abstreifleiste (6) aufgenommen ist und so die Abstreifleiste (6) derart zwangsgeführt ist, dass beim Ausfahren der Hubplalte (4) deren Abstreifleiste (6) auf den Formkernen (5) synchron mit verschiebbar ist und dabei die fertigen Spritzlinge (9) von ihren Formkernen (5) abstreifbar sind.

2. Werkzeug nach Anspruch 1,
**dadurch gekennzeichnet,**
**dass** an jedem der beiden Enden der Abstreifleiste (6) eine Führungseinrichtung (7) mit Führung (8) vorgesehen ist.

3. Werkzeug nach einem der vorhergehenden Ansprüche,
**dadurch gekennzeichnet,**
**dass** die Führung (8) gekrümmt verläuft.

4. Werkzeug nach einem der vorhergehenden Ansprüche,
**dadurch gekennzeichnet,**
**dass** beim Einfahren der Hubplalte (4) die Abstreifleiste (6) auf einem umgekehrten Führungsweg einer Führung (8) wieder in die Ausgangsposition zurückbewegbar ist.

5. Werkzeug nach einem der vorhergehenden Ansprüche,
**dadurch gekennzeichnet,**
**dass** zum Spritzen mehrerer Komponenten die Hubplalte (4) im ausgefahrenen Zustand drehbar ist, um die Spritzlinge (9) den Formenhahlräumen zum Spritzen der nächsten Komponente zuzuführen, und
**dass** nach dem Abstreifen der fertigen Spritzlinge (9) die Abstreifleiste (6) nach dem Weitertakten zum Spritzen der ersten Komponente eines neuen Kunststoffteils mittels einer Führung (8) einer Führungseinrichtung (7) in die Ausgangsposition zurückverfahrbar ist.

6. Werkzeug nach Anspruch 5,
**dadurch gekennzeichnet,**
**dass** die den fertigen Spritzlinge (9) zugeordneten Führungseinrichtungen (7) verstellbar sind.

7. Werkzeug nach Anspruch 5,
**dadurch gekennzeichnet,**
**dass** der Führung (8) der Führungseinrichtung (7) eine Weiche (10) zugeordnet ist.

8. Werkzeug nach einem der vorhergehenden Ansprüche,
**dadurch gekennzeichnet,**
**dass** die Hubplalte (4) an der Führungseinrichtung (7) abgestützt ist.

## Claims

1. A tool for the injection molding of plastic parts,
having two tool halves (1, 2) that can be extended as well as retracted, wherein, in the closed state, mold cavities are formed between the two tool halves, having a lifting plate (4) between the two tool halves (1, 2), the lifting plate (4) being arranged in one of the tool halves (1) such that it can be moved,
having mold cores (5) which project from the lifting plate (4) in an essentially radial direction and are arranged in parallel to each other, with the parts to be injection-molded (9) being injection-molded onto said mold cores (5), as well as having a stripper (6) for stripping the finished injection-molded parts (9) off from their mold cores (5), the stripper (6) being arranged on the mold cores (5) such that it can be moved,
**characterised in that**
the one tool half (1) with the lifting plate (4) includes a guiding device (7) that is arranged laterally on the tool and has a guide (8) in which one end of the stripper (6) is received, the stripper (6) therefore being force-guided in such a manner that, when the lifting plate (4) is extended, the stripper (6) can be moved along synchronously on the mold cores (5) and, therein, the finished injection-molded parts (9) can be stripped off from their mold cores (5).

2. The tool according to Claim 1,
**characterized in that**
a guiding device (7) having a guide (8) is provided at each of the two ends of the stripper (6).

3. The tool according to any one of the preceding claims,
**characterized in that**
the guide (8) extends in a curved manner.

4. The tool according to any one of the preceding claims,
**characterized in that**
when the lifting plate (4) is retracted, the stripper (6) can be moved back to its initial position on a reverse guiding path of the guide (8).

5. The tool according to any one of the preceding claims,
**characterized in that**
in order to injection-mold a plurality of components, the lifting plate (4) can be rotated in its extended state, in order to feed the parts to be injection-molded (9) to the mold cavities so that the next component can be injection-molded, and
that, after the finished injection-molded parts (9) have been stripped off, the stripper (6) can be moved back to its initial position by means of a guide (8) of a guiding device (7) after it has been advanced to injection-mold the first component of a new plastic part.

6. The tool according to Claim 5,
**characterized in that**
the guiding devices (7) that are allocated to the finished injection-molded parts (9) can be readjusted.

7. The tool according to Claim 5,
**characterized in that**
a deflector (10) is allocated to the guide (8) of the guiding device (7).

8. The tool according to any one of the preceding claims,
**characterized in that**
the lifting plate (4) is supported against the guiding device (7).

## Revendications

1. Outil pour le moulage par injection de pièces plastique, comprenant deux moitiés de moule (1, 2) pouvant être sorties et déplacées ensemble, dans lequel dans l'état fermé, des cavités de moule sont formées entre les deux moitiés de moule,
comprenant un plateau de levage (4) disposé mobile dans l'une moitié de moule (1) entre les deux moitiés de moule (1, 2),
comprenant des noyaux de moule (5) essentiellement en saillie radiale et parallèles entre eux sur le plateau de levage (4), sur lesquels les pièces à mouler (9) peuvent être injectées, ainsi qu'une baguette d'enlèvement (6) disposée mobile sur les noyaux de moule (5) pour enlever les pièces à mouler (9) finies de leurs noyaux de moule (5),
**caractérisé en ce que**
l'une moitié de moule (1) avec le plateau de levage (4) présente un dispositif de guidage (7) disposé sur le côté de l'outil comprenant un guide (8), dans lequel une extrémité de la baguette d'enlèvement (6) est reçue, et la baguette d'enlèvement (6) est ainsi dirigée de manière forcée que lors de la sortie du plateau de levage (4), sa baguette d'enlèvement (6) est déplacée conjointement de manière synchrone sur les noyaux de moule (5) et ainsi les pièces à mouler (9) finies peuvent être enlevées de leurs noyaux de moule (5).

2. Outil selon l'une des revendications précédentes,
**caractérisé en ce que**
sur chacune des deux extrémités de la baguette d'enlèvement (6), il est prévu un dispositif de guidage (7) avec guide (8).

3. Outil selon la revendication 1 ou 2,
**caractérisé en ce que** le guide (8) est coudé.

4. Outil selon l'une des revendications précédentes,
**caractérisé en ce que**
lorsque le plateau de levage (4) rentre, la baguette d'enlèvement (6) peut être ramenée dans la position de départ sur un trajet de guidage inverse d'un guide (8).

5. Outil selon l'une des revendications précédentes,
**caractérisé en ce que**
pour injecter plusieurs composantes, le plateau de levage (4) est rotatif dans l'état sorti pour amener les pièces à mouler (9) vers les cavités de moule pour l'injection de la composante suivante, et
qu'après l'enlèvement de la pièce à mouler (9) finie, la baguette d'enlèvement (6) peut être ramenée à la position de départ après la poursuite de la cadence pour injecter la première composante d'une nouvelle pièce plastique au moyen d'un guide (8) d'un dispositif de guidage (7).

6. Outil selon la revendication 5,
**caractérisé en ce que** les dispositifs de guidage (7) attribués aux pièces à mouler (9) finies sont réglables.

7. Outil selon la revendication 5,
**caractérisé en ce que** le guide (8) du dispositif de guidage (7) a un aiguillage (10).

8. Outil selon l'une des revendications précédentes,
**caractérisé en ce que**
le plateau de levage (4) est appuyé sur le dispositif de guidage (7).
